Europäisches Patentamt

European Patent Office

Office européen des brevets

(19)

(11) Publication number: **0 046 469**
**B1**

# (12) EUROPEAN PATENT SPECIFICATION

(45) Date of publication of patent specification: **18.07.84**

(51) Int. Cl.³: **B 60 N 1/00**

(21) Application number: **80302911.5**

(22) Date of filing: **22.08.80**

(54) Vehicle safety seat.

(43) Date of publication of application:
**03.03.82 Bulletin 82/9**

(45) Publication of the grant of the patent:
**18.07.84 Bulletin 84/29**

(84) Designated Contracting States:
**DE FR SE**

(56) References cited:
**AU - B - 264 159
CA - A - 755 505
DE - A - 2 149 268
FR - A - 532 507
GB - A - 739 676
GB - A - 802 321
GB - A - 1 245 544
US - A - 3 393 010
US - A - 3 501 200
US - A - 3 761 125
US - A - 3 888 329**

(73) Proprietor: **B.S.G. International plc
Burgess House 1270 Coventry Road
Yardley Birmingham, B25 8BB (GB)**

(72) Inventor: **Cunningham, Douglas James
Sambourne 4 Church Close Dunton Bassett
Lutterworth Leicestershire LE17 5JY (GB)**

(74) Representative: **Hollinghurst, Antony
Britax Central Services 40 Granby Avenue
Garretts Green Birmingham, B33 OSJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a safety seat for installation in a vehicle such as a bus or coach, the seat being one of a longitudinal row of similar forward-facing seats and being adapted to restrain the forward movement of the occupant of the next rearward seat when the vehicle abruptly decelerates.

US—A—3761125 discloses a car seat in which the seat back is mounted on a pair of friction pivot joints and articulated at a location between its top and bottom by another pair of friction joints. Both pairs of friction joints are arranged to yield in the event of impact from behind.

An adjustable passenger safety guard of the fixed type is known from, for example CA—A—755505. In this type of restraint, the fixed position of a safety bar is adjustable to accommodate passengers of different sizes. When not required, the bar can be pivoted away from the occupant's body to a storage position in which it appears or serves as an arm rest. Although such a device provides useful restraint and can be neatly stored, its disadvantage lies in the need for manual positioning, by the occupant, to provide safety restraint. This disadvantage may be overcome by using a safety bar which is automatically positioned before the occupant's torso in the event of the vehicle exceeding a pre-determined deceleration. Such a device is disclosed in GB—A—802321.

However a disadvantage of this device is the time of response between, for example, the instant of vehicle impact and the positioning of the safety bar before the occupant's torso. The bar is positioned by a series of levers which are actuated only after the vehicle suspension has moved relative to the vehicle chassis when the vehicle decelerates. It is clearly most important, for safety reasons, to position a device in good time to restrain the forward momentum of a seated occupant when the vehicle has started to decelerate. Moreover, in the case of a device which is automatically positioned to provide occupant restraint under vehicle deceleration, it is important to avoid complexity so as to keep manufacturing costs to a minimum consistant with providing a safety seat having reliable operating characteristics.

Frontal impact tests (at 10 g) show that a dummy passenger collides with the next forward seat in two stages; for about the first 10 ms the knees of the dummy are pressed against the lower part of the back portion of such seat with a force approaching 4.4 kN when the vehicle and hence the seat are arrested; for the second 100 ms, approximately, the torso of the dummy impacts the upper part of the seat back. Seats may be so designed that frame arms to bend or yield to absorb some of the forward energy.

The invention accordingly provides a safety seat according to claim 1.

According to this solution, the flap is deployed directly following the rearwardly seated occupant's movement which projected from his own seat due to vehicle deceleration. The flap portion is, therefore, deployed in good time to provide the necessary safety restraint. Under normal driving conditions, the back portion and flap of the safety seat can occupy positions that provide a conventional form of back support for the occupant of said safety seat namely, the occupant who sits before the rearwardly seated occupant whose movements, under accident conditions, are to be restrained. The safety seat can be made of simple construction and this helps to reduce manufacturing costs.

The invention covers a vehicle fitted with a longitudinal row of safety seats, each as described above with respect to the present invention.

An embodiment of the invention will now be described with reference to the accompanying drawings, in which:

Figures 1 to 3 schematically illustrate elevational views of a safety seat in accordance with one embodiment of the invention and a rearwardly seated occupant, the Figures showing various stages in the operation of the safety seat under vehicle deceleration, and

Figures 4 and 5 are views, corresponding to Figures 1 and 2, of another embodiment of the invention.

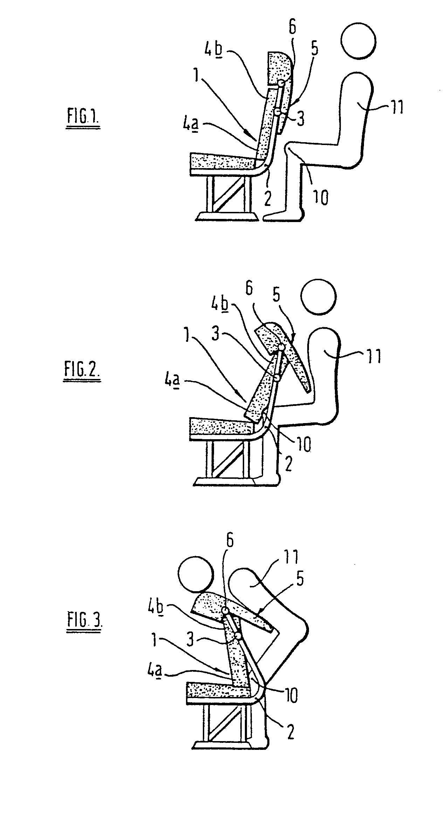

Referring to the Figures 1 to 3, a vehicle seat in accordance with the preferred embodiment of the invention, comprises a back portion 1 which is mounted on a seat frame 2 by pivots 3, one at each side of the back portion. The frame 2 includes a pair of upstanding members, one at each side of the back portion, which members may be the arms of an inverted U. A lower part 4a of the back portion 1 namely, the part below the pivot 3, is normally level with the knees 10 of an occupant 11 of the next rearward seat. The upper part 4b of the back portion 1 extends above the pivots 3. A flap 5 is mounted on the frame 3 by pivots 6, one at each side. Pivots 6 may be parts of that portion of the U-shaped frame which links the arms or upstanding members. The flap 5 extends behind the upper part 4b of the back portion 1, with respect to the normal direction of travel of the vehicle. The back portion and the flap 5 are normally constrained in the position shown in Figure 1, to act as a back support for the forwardly seated occupant, i.e. for the seat depicted in the drawings, by one or more shear pins or breakout latches (not shown) arranged to release the back portion 1 when a pre-determined force thereon is exceeded due to the knee pressure of the occupant 11.

Figures 2 and 3 show different stages in the operation of the safety seat under vehicle deceleration. In Figure 2, the knees of the rearwardly seated occupant have forced the lower part 4a of the flap portion 1 forwardly of the frame arms 2 thereby causing the upper part 4b to act upon and to lever upwardly and rearwardly the flap portion 5. The flap portion then restrains the rearwardly seated occupant by his thighs, the flap portion extending from the occupant's lap to his upper torso. Self-locking stays (not shown) limit the rearward movement of the back flap.

Their self-locking action prevents re-folding.

Figure 3 shows how the seat frame 2 yields to absorb the impact of the occupant's torso. Suitable choice of materials for the frame 2 enables some of the energy of the occupant's forward motion to be absorbed in the event of an accident. The back and lap portions may normally be fixed in the position shown in Figure 1 by a shear pin or break-out latch adjusted to release the back portion when the vehicle deceleration exceeds 1.5 g with an occupant of average physical dimensions.

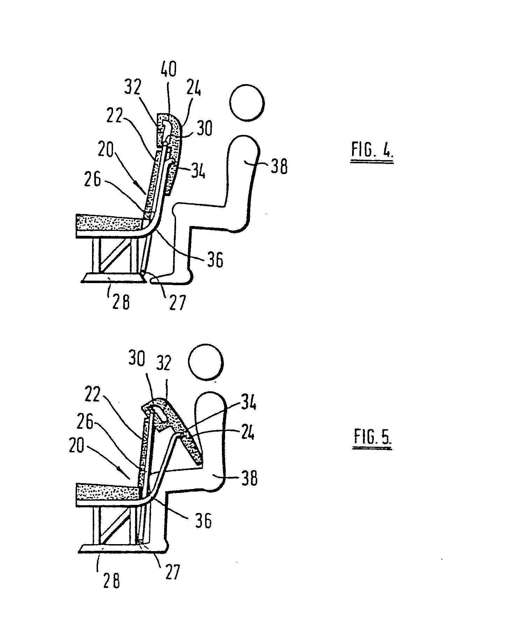

Figures 4 and 5 show an alternative to the safety seat illustrated in Figures 1 to 3. The alternative seat 20 has a back portion 22 and a flap 24, the upper end of which serves as a head rest. The back portion 22 is mounted on a frame 26 which is pivotally attached at 27 to the back of a seat subframe 28 which is secured to the floor of the vehicle. The upper end of the frame 26 carries a cam follower 30 which engages in a slot 32 in the flap 24. The flap 24 is also pivotally mounted at 34 on a seat frame 36 which is fixed to the subframe 28.

Thus, in contrast to the seat illustrated in Figures 1 to 3, the seat back 22 pivots about an axis located below the knees of an occupant 38 of the next rearward seat. The back frame 26 is connected to the seat frame 36 by one or more sheer pins, break out latches or the like arranged to release the back frame 26, and the back portion 22 mounted thereon, when a predetermined force is exerted by the knees of the occupant 38. When the top of the frame 26 moves forwards, the cam follower 30 travels along the slot 32 and the flap 24 is tilted to the position shown in Figure 5.

## Claims

1. A safety seat for a vehicle, comprising a frame (2, 36), a back portion (4, 22) mounted for angular movement relative to the frame (2, 36) so as to be movable forwardly by knee pressure of a rearwardly seated occupant (11, 38) due to the force exerted by said occupant's knees when a pre-determined vehicle deceleration is exceeded, and a flap (5, 24), characterised in that the flap (5, 24) is pivotally mounted on the frame (2, 36) and engages with the back portion (4, 22) so that forward movement of the back portion (4, 24) causes deployment of said flap (5, 24) so that its lower edge moves rearwardly to confront the part of the occupant's torso above the lap.

2. A safety seat according to claim 1, characterised in that the back portion (4, 22) and the flap (5, 24) are fixed in their normal back rest position by means adapted to disengage or rupture when a pre-determined force is exceeded.

3. A safety seat according to claim 1 or 2, characterised in that the frame (2, 36) is constructed of material such that it deforms to absorb part of the energy of the rearwardly seated occupant's forward movement after the flap (5, 24) has been deployed.

4. A safety seat according to claim 1, 2 or 3, characterised in that the back portion (4) is mounted on the frame (2) for angular movement about an axis located above the normal knee level of the rearwardly seated occupant (11) and the flap (5) is mounted on the frame (2) above the back portion (4) so as to extend behind the back portion (4) with respect to the normal direction of travel of the vehicle.

5. A safety seat according to claim 1, 2 or 3, characterised in that the back portion (22) is mounted for angular movement about an axis located below the normal knee level of the rearwardly seated occupant (38), a cam follower (3) mounted on the back portion (22) engaging in a slot (32) in the flap (24).

## Patentansprüche

1. Sicherheitssitz für Fahrzeuge, mit einem Rahmen (2, 36), einem Rückenteil (4, 22), welcher derart relativ zum Rahmen (2, 36) in einem Winkel bewegbar ist, daß er durch Kniedruck einer hinten sitzenden Person (11, 38) aufgrund der durch die Kniee dieser Person ausgeübten Kraft nach vorne bewegbar ist, wenn eine vorbestimmte Fahrzeugverzögerung überschritten wird, und mit einem Klappteil (5, 24) dadurch gekennzeichnet, daß das Klappteil (5, 24) schwenkbar am Rahmen (2, 36) angeordnet ist und mit dem Rückenteil (4, 22) derart zusammenwirkt, daß eine Vorwärtsbewegung des Rückenteils (4, 22) eine Verstellung des Klappteils (5, 24) bewirkt, derart, daß dessen unterer Rand sich nach hinten bewegt, um den Teil des Rumpfes der Person oberhalb des teils aufzufangen.

2. Sicherheitssitz nach Patentanspruch 1, dadurch gekennzeichnet, daß der Rückenteil (4, 22) und das Klappteil (5, 24) in ihrer normalen Rückenlehnenstellung durch eine Einrichtung fixiert sind, welche bei Überschreiten einer vorbestimmten Kraft lösbar ist oder bricht.

3. Sicherheitssitz nach Anspruch 1 oder 2, dadurch gekennzeichnet, daß der Rahmen (2, 36) aus einem deformierbaren Material hergestellt ist, um einen Teil der Energie der sich nach vorne bewegenden, hinten sitzenden Person aufzunehmen, nachdem das Klappteil (5, 24) verstellt worden ist.

4. Sicherheitssitz nach Anspruch 1, 2 oder 3, dadurch gekennzeichnet, daß der Rückenteil (4) auf dem Rahmen (2) um eine Achse in einem Winkel bewegbar ist, welche oberhalb der normalen Kniehöhe einer hinten sitzenden Person (11) angeordnet ist, und daß das Klappteil (5) auf dem Rahmen (2) oberhalb des Rückenteils (4) derart angeordnet ist, daß es sich bezogen auf die normale Fahrtrichtung des Fahrzeugs hinter dem Rückenteil (4) erstreckt.

5. Sicherheitssitz nach Anspruch 1, 2 oder 3, dadurch gekennzeichnet, daß der Rückenteil (22) um eine Achse winklig bewegbar gelagert ist, die unterhalb der normalen Kniehöhe der hinten sitzenden Person (38) angeordnet ist, wobei ein auf dem Rückenteil (22) angeordneter Mitnehmer (3) in einem Schlitz (32) im Klappteil (24) eingreift.

## Revendications

1. Siège de sécurité pour véhicule, comprenant un bâti (2, 36), un dossier (4, 22) monté mobile angulairement par rapport au bâti (2, 36) de façon à pouvoir être déplacé vers l'avant par la pression des genoux d'un occupant assis par derrière (11, 38) du fait de la force exercée par lesdits genoux de l'occupant lorsqu'une décélération de véhicule prédéterminée est dépassée, et un abattant (5, 24), caractérisé en ce que l'abattant (5, 24) est monté à articulation sur le bâti (2, 36) et coopère avec le dossier (4, 22) en sorte que le déplacement vers l'avant du dossier (4, 22) amène ledit abattant (5, 24) à se déployer de façon que son bord inférieur se déplace vers l'arrière pour se trouver en face de la partie du tronc de l'occupant située au-dessus du giron.

2. Siège de sécurité selon la revendication 1, caractérisé en ce que le dossier (4, 22) et l'abattant (5, 24) sont fixés dans leur position d'appui de dos normale par des moyens agencés pour se dégager ou casser lors du dépassement d'une force prédéterminée.

3. Siège de sécurité selon l'une des revendications 1 ou 2, caractérisé en ce que le bâti (2, 36) est réalisé en un matériau de nature à se déformer pour absorber une partie de l'énergie du déplacement subi vers l'avant par l'occupant assis par derrière après le déploiement de l'abattant (5, 24).

4. Siège de sécurité selon l'une quelconque des revendications 1 à 3, caractérisé en ce que le dossier (4) est monté sur le bâti (2) mobile angulairement autour d'un axe situé au-dessus du niveau normal des genoux de l'occupant assis par derrière (11) et l'abattant (5) est monté sur le bâti (2) au-dessus du dossier (4) de fan à s'étendre derrière le dossier (4) par rapport à la direction normale de marche du véhicule.

5. Siège de sécurité selon l'une quelconque des revendications 1 à 3, caractérisé en ce que le dossier (22) est monté mobile angulairement autour d'un axe situé au-dessous du niveau normal des genoux de l'occupant assis par derrière (38), un suiveur de came (3) monté sur le dossier (22) s'engageant dans une fente (32) de l'abattant (24).

FIG.1.

FIG.2.

FIG.3.

FIG. 4.

FIG. 5.